# EUROPÄISCHE PATENTSCHRIFT

(11) **EP 3 068 039 B1**
(45) Veröffentlichungstag und Bekanntmachung des Hinweises auf die Patenterteilung: **10.04.2019**
(21) Anmeldenummer: 16155642.8
(22) Anmeldetag: 15.02.2016
(51) Int. Cl.: H02P 29/00, H02H 7/00, H02H 7/08

(54) **VERFAHREN ZUM SCHUTZ VON ELEKTRONISCHEN MOTOREN VOR KRITISCHEN BETRIEBSZUSTÄNDEN**
METHOD FOR THE PROTECTION OF ELECTRONIC MOTORS BEFORE CRITICAL OPERATING STATES
PROCEDE DE PROTECTION DE MOTEURS ELECTRONIQUES CONTRE LES ETATS DE FONCTIONNEMENT CRITIQUES

(30) Priorität: 09.03.2015 DE 102015103404
(43) Veröffentlichungstag der Anmeldung: 14.09.2016
(73) Patentinhaber: KRIWAN INDUSTRIE-ELEKTRONIK GMBH, 74670 Forchtenberg (DE)
(72) Erfinder: PENG, Xiaoming, 74613 Öhringen (DE)
(74) Vertreter: Tetzner, Michael

(56) Entgegenhaltungen:
- EP-A1- 1 600 337
- DE-A1-102007 013 551

## Beschreibung

Die Erfindung betrifft ein Verfahren zum Schutz von elektronischen Motoren vor kritischen Betriebszuständen, wobei im Betrieb des elektrischen Motors ein Motorstromwert und/oder ein Motorspannungswert gemessen und mit einem zulässigen Betriebsbereich verglichen wird, wobei ein Ausgangssignal beim Verlassen des zulässigen Betriebsbereichs generiert wird.

In der DE 10 2004 036 134 A1 wird ein Verfahren zur Ansteuerung eines Elektromotors beschrieben, bei dem mittels eines Stromreglers eine thermische Überlastung der Ankerwicklung vermieden wird. Dabei wird ein Motorstrom Istwert gemessen und mit einem Motorstromsollwert verglichen, wobei bei einer Differenz eine Anpassung des Motorstromistwertes an den Motorstromsollwert erfolgt. Der Motorstromsollwert wird dabei in Abhängigkeit der Motorumgebungstemperatur berechnet. Dieses bekannte Verfahren erfordert neben der Messung des Motorstromistwertes auch die Erfassung der Motorumgebungstemperatur. Darüber hinaus sind die Platzierung und eine gute Kontaktierung des Temperatursensors zur Erfassung der Motorumgebungstemperatur von entscheidender Bedeutung. Außerdem ist bei unterschiedlichen Motoren eine individuelle Abstimmung der Abhängigkeit zwischen Motorstromsollwert und Motorumgebungstemperatur erforderlich.

Ein weiterer Motorschutz für einen Elektromotor ist aus der DE 10 2009 012 942 A1 bekannt, bei dem der Motorstrom und die Anlaufzeit des Motorstroms erfasst und mit hinterlegten Grenzwerten verglichen werden.

In der WO 2008/113308 A1 wird ein Motorschutzgerät für einen Elektromotor offenbart, das sich dadurch auszeichnet, dass in Abhängigkeit des thermischen Betriebszustandes des Elektromotors unterschiedliche Schwellenwerte für die Überwachung der Anlaufzeit verwendet werden. Darüber hinaus werden die Schwellenwerte für die Anlaufzeiten in Abhängigkeit des tatsächlich fließenden Anlaufstromes ermittelt und angepasst.

Aus der DE 10 2007 013 551 A1 ist ein Verfahren zum selbsttätigen Einstellen eines einen Überstromauslöser aufweisenden Schutzgerätes bekannt, wobei bei vorgegebener Belastung das Integral des Quadrats des Motorstroms über der Zeit bestimmt und anhand dieses Integrals die Auslösezeit eine Überstromauslösers abgeleitet wird.

In der EP 1 600 337 A1 wird ein elektronischer Batterieschutzschalter eines Kraftfahrzeuges beschrieben, bei dem eine Steuereinrichtung einen gemessenen Stromwert mit einem vorgegebenen Grenzwert vergleicht, wobei dieser Grenzwert an verschiedene Betriebszustände des Kraftfahrzeuges angepasst werden kann.

Der Erfindung liegt nun die Aufgabe zugrunde, ein Verfahren zum Schutz von elektrischen Motoren vor kritischen Betriebszuständen anzugeben, das sich durch eine kostengünstige Realisierung auszeichnet und bei den unterschiedlichsten elektrischen Motoren eingesetzt werden kann.

Erfindungsgemäß wird diese Aufgabe durch die Merkmale des Anspruches 1 gelöst, indem im Betrieb des elektrischen Motors ein Motorstromwert und/oder ein Motorspannungswert gemessen und mit einem zulässigen Betriebsbereich verglichen wird, wobei ein Ausgangssignal beim Verlassen des zulässigen Betriebsbereichs generiert wird. Der zulässige Betriebsbereich wird dabei während des Betriebes des elektrischen Motors aus dem gemessenen Motorstromwert und/oder den gemessenen Motorspannungswert ermittelt und laufend angepasst.

Weitere Ausgestaltungen der Erfindung sind Gegenstand der weiteren Ansprüche.

Das erfindungsgemäße Verfahren zeichnet sich insbesondere dadurch aus, dass der zu überwachende Betriebsparameter, der gemessen wird, gleichzeitig auch zur Bestimmung des zulässigen Betriebsbereiches verwendet wird. Der Motorstromwert und/oder der Motorspannungswert sind dabei Betriebsparameter, die in vielen Fällen ohnehin schon ermittelt werden bzw. die ohne großen Aufwand erfasst werden können. Es kann somit insbesondere auf die oftmals kritische und aufwendige Platzierung eines Temperatursensors verzichtet werden.

Der Betrieb von elektrischen Motoren ist durch einen anfänglichen Anlaufbetrieb (dynamischer Startvorgang) und einen sich daran anschließenden Normalbetrieb gekennzeichnet. Beide Betriebsphasen sind relativ unterschiedlich und erfordern daher auch entsprechend angepasste, zulässige Betriebsbereiche. Je nachdem, ob ein oder beide Betriebsphasen überwacht werden sollen, ist der zulässige Betriebsbereich für den Anlaufbetrieb und/oder den Normalbetrieb zu ermitteln. Für die Ermittlung des zulässigen Betriebsbereichs des Anlaufbereichs hat es sich als vorteilhaft herausgestellt, wenn ein Anlaufwert und ein Schwellenwert des gemessenen Motorstromwerts und/oder des gemessenen Motorspannungswerts ermittelt werden, wobei der Schwellenwert den Übergang zum Normalbetrieb kennzeichnet.

Gemäß einer weiteren Ausgestaltung umfasst die Ermittlung des zulässigen Betriebsbereichs für den Anlaufbereich auch die Erfassung des Übergangsverlaufs des gemessenen Motorstromwerts und/oder des gemessenen Motorspannungswerts zwischen Anlaufwert und Schwellenwert, wobei ein unkritischer Motorstart im Anlaufbereich dann vorliegt, wenn der Betrag (Absolutwert) der Ableitung des erfassten Übergangsverlaufs einen vorgegebenen maximalen Wert nicht überschreitet. Der Übergangsverlauf des gemessenen Motorstromwerts und/oder des gemessenen Motorspannungswerts zwischen Anlaufwert und Schwellenwert soll demnach einen differenzierbaren Übergangsverlauf darstellen und insbesondere keinen stufenförmigen Verlauf aufweisen.

Der Schwellenwert ist zweckmäßiger Weise durch die Multiplikation des Anlaufwertes mit einer vorgegebenen Verhältniszahl (beispielsweise 0,5) definiert. Der Schwellenwert, der sich nach einer vorgegebenen Zeit einstellen soll, bildet im Falle einer Motorstrommessung die Obergrenze für einen unkritischen Motorstart und im Falle einer Motorspannungsmessung die Untergrenze für einen unkritischen Motorstart.

Gemäß einer weiteren Ausgestaltung der Erfindung wird der Anlaufwert durch eine erste Amplitude bzw. einen ersten Effektivwert des gemessenen Motorstromwertes und/oder des gemessenen Motorspannungswerts ab einem der nachfolgend angeführten Zeitpunkte definiert:
- ein vorgegebener Zeitpunkt nach Einschaltung des Motors oder
- ein Zeitpunkt, bei dem der gemessene Motorstromwert und/oder der gemessene Motorspannungswert anfängt, die Frequenz eines Versorgungsnetzes aufzuweisen, an dem der Motor betrieben wird oder
- ein Zeitpunkt, ab dem der Verlauf des gemessenen Motorstromwerts und/oder des gemessenen Motorspannungswerts differenzierbar wird.

Alternativ kann der Anlaufwert aber auch durch den maximalen Wert des gemessenen Motorstromwerts nach Einschalten des Motors definiert werden. Für die Feststellung eines kritischen bzw. unkritischen Zustands des Motors im Anlaufbetrieb kommt es daher nicht auf den tatsächlichen Wert des Anlaufwertes an, sondern vielmehr darauf, ob der Schwellenwert in einer vorgegebenen Zeit erreicht wird und optional, ob der Betrag (Absolutwert) der Steigung des Übergangsverlaufs zwischen Anlaufwert und Schwellenwert einen vorgegebenen maximalen Wert nicht überschreitet.

Wird der elektrische Motor durch einen Wechselstrommotor mit einer Hauptwicklung und einer Hilfswicklung gebildet, kann der Spannungswert an der Hilfswicklung gemessen werden, kann der Anlaufwert durch den minimalen Wert des gemessenen Spannungswertes nach Einschalten des Motors festgelegt werden.

Gemäß einem bevorzugten Ausführungsbeispiel der Erfindung erfolgt die Ermittlung des zulässigen Betriebsbereichs für den Normalbetrieb durch Bestimmung eines Vergleichswertes, der sich durch Mittelung mehrerer Werte des gemessenen Motorstromwerts und/oder des gemessenen Motorspannungswerts während des Normalbetriebs ergibt. Die Bestimmung des Vergleichswertes kann dabei insbesondere durch Tiefpassfilterung des gemessenen Motorstromwerts und/oder des gemessenen Motorspannungswerts während des Normalbetriebs erfolgen. Eine Ober- und/oder Untergrenze des zulässigen Betriebsbereichs für den Normalbetrieb kann dann durch Multiplikation des Vergleichswertes mit einer vorgebenden Verhältniszahl (beispielsweise 1,5 und/oder 0,8) festgelegt werden.

Der Vergleichswert kann dabei laufend angepasst werden. Die Anpassung erfolgt in der Weise, dass die Mittelung bzw. Tiefpassfilterung des gemessenen Motorstromwerts und/oder des gemessenen Motorspannungswerts zeitlich gleitend mit den aktuellen Messwerten stattfindet. Der durch die gleitende Mittelung bzw. Tiefpassfilterung des gemessenen Motorstromwerts und/oder des gemessenen Motorspannungswerts ermittelte Vergleichswert gewährleitet eine automatische Anpassung an die aktuellen Betriebsbedingungen im Normalbetrieb. Die gleitende Mittelung bzw. Tiefpassfilterung wird vorzugsweise mit einer vorgebenden, zeitlichen Verzögerung vorgenommen. Dadurch kann verhindert werden, dass der zulässige Betriebsbereich zu schnell an einen schnell steigenden bzw. fallenden Messwert angepasst wird und dadurch die Obergrenze bzw. Untergrenze des zulässigen Betriebsbereichs bis über einen akzeptierbaren Wert verschoben wird. Als weitere Sicherheitsmaßnahme kann vorgesehen werden, dass die laufende Anpassung des Vergleichswertes ausgesetzt wird, wenn der gemessene Motorstromwert und/oder der gemessene Motorspannungswert den zulässigen Betriebsbereich kurzfristig verlassen. In diesem Fall wird die Anpassung des Vergleichswertes erst mit einer zeitlichen Verzögerung fortgesetzt, wenn sich der gemessene Motorstromwert und/oder der gemessene Motorspannungswert wieder im zulässigen Betriebsbereich befinden.

Als eine weitere Alternative für die Festlegung der Ober- und/oder Untergrenze des zulässigen Betriebsbereichs für den Normalbetrieb kann die Multiplikation des Anlaufwertes mit einer vorgegebenen Verhältniszahl herangezogen werden. Dieses Kriterium ermöglicht eine einfache und sichere Festlegung der Ober- und/oder Untergrenze des zulässigen Betriebsbereichs für den Normalbetrieb, falls eine laufende Anpassung an die ändernden Betriebsbedingungen nicht notwendig ist. So kann die Obergrenze 12 im Falle einer Motorstrommessung auf beispielsweise 0,8 des Anlaufwertes 5 und die Untergrenze 23 im Falle einer Motorspannungsmessung auf beispielsweise 1,1 des Anlaufwertes 20 festgelegt werden.
Sowohl im Anlaufbetrieb als auch im Normalbetrieb kann vorgesehen werden, dass das Ausgangssignal beim Verlassen des zulässigen Betriebsbereichs nur dann erzeugt wird, wenn der gemessene Motorstromwert und/oder der gemessene Motorspannungswert den zulässigen Betriebsbereich für wenigstens eine definierte Zeitdauer verlässt, wobei die definierte Zeitdauer eine vorgegebene Zeitdauer darstellen kann oder in Abhängigkeit des Ausmaßes der Überschreitung des zulässigen Betriebsbereichs angepasst wird. Dadurch soll verhindert werden, dass kurze Spitzen oder Fehlmessungen des gemessenen Motorstromwertes zu einem ungewollten Abschalten des Motors führen.

Man kann also einen kritischen Betriebszustand dann annehmen, wenn die vorgegebene Zeitdauer beispielsweise 2 Sekunden beträgt. Sind der gemessene Motorstromwert und/oder der gemessene Motorspannungswert in einem überdurchschnittlich hohen Maß außerhalb des zulässigen Betriebsbereichs, kann aber vorgesehen werden, dass die definierte Zeitdauer beispielsweise auf 1 Sekunde herabgesetzt wird.

Die Erfindung wird nun anhand der Beschreibung zweier Ausführungsbeispiele und der Zeichnung näher erläutert.

In der Zeichnung zeigen
- Fig. 1: ein Schaltbild eines Drehstrommotors mit Überwachung des Motorstroms,
- Fig. 2: eine Kennlinie der Motorstromamplitude während des Anlaufbetriebes,
- Fig. 3: eine Wechselstromkennlinie des Motorstromes während des Anlaufbetriebes,
- Fig. 4: eine Kennlinie der Motorstromamplitude während des Normalbetriebs,
- Fig. 5: ein Schaltbild eines Wechselstrommotors mit Überwachung der Spannung der Motorhilfswicklung,
- Fig. 6: eine Kennlinie der Spannungsamplitude der Motorhilfswicklung während des Anlaufbetriebs und
- Fig. 7: eine Kennlinie der Spannungsamplitude der Motorhilfswicklung im Normalbetrieb.

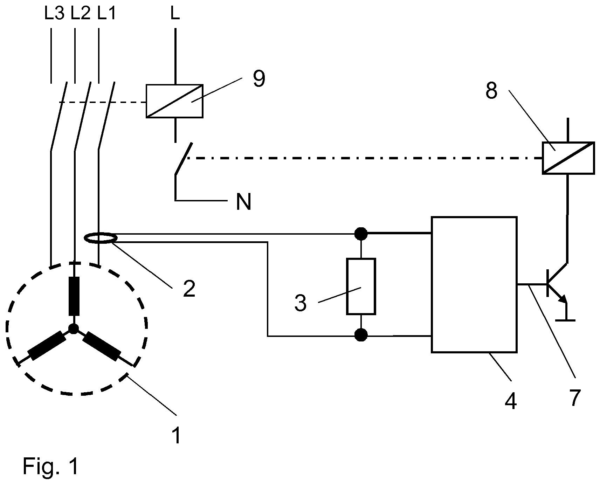

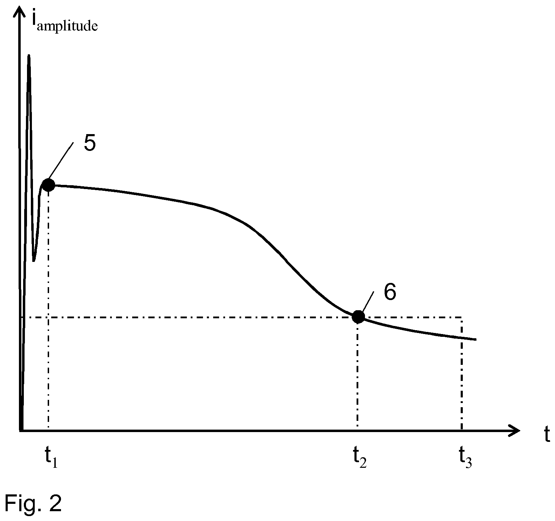

Fig. 1 zeigt ein Schaltbild mit einem Drehstrommotor 1, bei dem an einer Phase der Motorstrom über einen Stromwandler 2 abgegriffen und über einen Messwiderstand 3 in einem Mikroprozessor 4 in einen Motorstromwert umgewandelt wird. Die Ermittlung des Motorstromwertes erfolgt kontinuierlich in vorgegebenen, kurzen Zeitintervallen von beispielsweise 1 ms. Für den Anlaufbereich des Drehstrommotors 1 ergibt sich dann typischerweise eine Kennlinie, wie sie in Fig. 2 dargestellt ist. Nach einer kurzen ersten Phase, bei der die Motorstromamplitude stark schwankt, stellt sich ein Anlaufwert 5 ein, der beispielsweise durch die Stromamplitude an einem vorgegebenen Zeitpunkt t₁ nach Einschalten des Motors definiert ist. Ab dem Zeitpunkt t₁ stellt sich ein stetig fallender Übergangsverlauf bis zu einem Schwellenwert 6 ein, wobei der Schwellenwert 6 wiederum eine Stromamplitude darstellt, die beispielsweise durch Multiplikation (der Stromamplitude) des Anlaufwertes 5 mit einer vorgegebenen Verhältniszahl (beispielsweise 0,5) festgelegt ist. Der dynamische Verlauf der in Fig. 2 gezeigten Motorstromamplitude beschreibt dann einen erfolgreichen Startvorgang des Drehstrommotors 1, wenn die Stromamplitude bis zu einem spätesten Zeitpunkt t₃ nach Einschaltung des Drehstrommotors unterhalb des ermittelten Schwellenwertes 6 liegt. Der späteste Zeitpunkt t₃ kann beispielsweise bei 5 Sek. nach dem Motorstart betragen. Im dargestellten Ausführungsbeispiel wird der Schwellenwert bereits zu einem Zeitpunkt t₂ erreicht.

Als weiteres Kriterium für einen erfolgreichen Motorstart kann zusätzlich der Übergangsverlauf der Stromamplitude zwischen dem Anlaufwert 5 und dem Schwellenwert 6 untersucht werden. Dabei wird ein erfolgreicher Motorstart dann angenommen, wenn der Betrag (Absolutwert) der Ableitung des erfassten Übergangsverlaufes einen vorgegebenen maximalen Steigungswert von beispielsweise 1000A/s nicht überschreitet. Auf diese Weise kann insbesondere ein sprungartiger Verlauf erkannt werden, der eine magnetisch bedingte Einschaltstromüberhöhung, eine Schaltprellung oder eine Fehlmessung widerspiegelt. Ein sprungartiger Verlauf kann dazu führen, dass der Schwellenwert 6 unterschritten wird, stellt aber auf keinen Fall den Abschluss eines erfolgreichen Motorstartes dar. Dieses zusätzliche Kriterium schließt derartige Fehlerkennung aus, die einen möglichen kritischen Motorstart verpassen würde.

Ist bis zum spätesten Zeitpunkt t₃ kein erfolgreicher Motorstart erkannt, liegt ein kritischer Motorstart vor. Im Falle eines kritischen Motorstarts würde der Mikroprozessor 4 ein Ausgangssignal 7 generieren, das in geeigneter Weise, beispielsweise mittels Relais 8, 9, die Abschaltung des Drehstrommotors bewirkt.

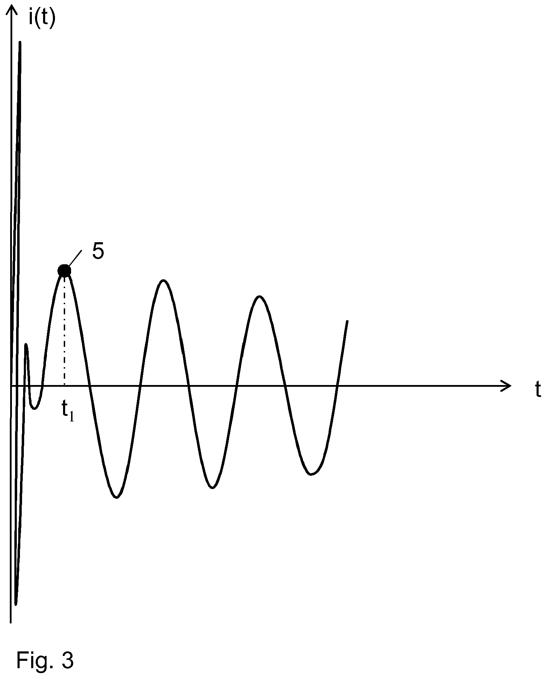

Als Alternative zur Festlegung des Anlaufwertes 5 kann auch der Zeitpunkt t'₁ herangezogen werden, der dadurch gekennzeichnet ist, dass der gemessene Motorstromwert anfängt, die Frequenz des Versorgungsnetzes aufzuweisen, an dem der Motor betrieben wird (siehe Fig. 3). Vor dem Zeitpunkt t'₁ ist die Stromspitze deutlich höher und der Stromwert weist einen deutlich schneller ändernden Verlauf auf. Die Festlegung des Schwellenwertes 6 kann dann wiederum durch Multiplikation mit einer vorgegebenen Verhältniszahl entsprechend Fig. 2 erfolgen. Eine weitere Möglichkeit zur Bestimmung des Anlaufwertes 5 besteht darin, die ermittelte Kennlinie auf den Zeitpunkt zu untersuchen, ab dem die Kennlinie differenzierbar ist. Unter differenzierbar ist dabei ein Übergangverlauf zu verstehen, der einen vorgegebenen maximalen Steigungswert nicht überschreitet. Dieser Zeitpunkt würde bei der Kennlinie gemäß Fig. 2 mit dem Zeitpunkt t₁ übereinstimmen. Eine weitere denkbare Variante zur Bestimmung des Anlaufwertes wäre die Ermittlung des maximalen Wertes des gemessenen Motorstroms nach Einschalten des Motors. In allen Fällen wird aber anhand des ermittelten Anlaufwertes ein Schwellenwert berechnet, der im Falle bei einer Motorstrommessung innerhalb eines vorgegebenen Zeitraumes t₃ unterschritten werden muss.

Die in Fig. 2 dargestellte Motorstromkennlinie ist für einen elektrischen Motor typisch und unterscheidet sich im Wesentlichen nur in der Größe der Stromamplitude. In allen Fällen ist die Stromkennlinie dadurch gekennzeichnet, dass sich nach anfänglichen starken Schwankungen ein Anlaufwert 5 eingestellt, nach dem sich ein differenzierbarer Übergang bis zu einem Schwellenwert ergibt. Es ist somit für unterschiedliche Motoren keine Anpassung der Schutzschaltung (Mikroprozessor 4) erforderlich, da die einzuhaltenden Grenzen aus der Messung des zu überwachenden Betriebsparameters selbst festgelegt werden.

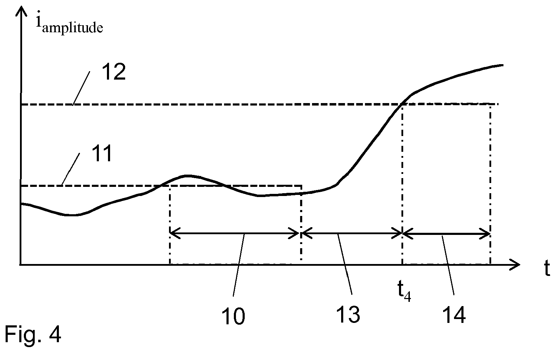

An den in Fig. 2 dargestellten, dynamischen Anlaufbereich schließt sich der Normalbetriebsbereich an, dessen Motorstromkennlinie in Fig. 4 dargestellt ist. Der Normalbetrieb zeichnet sich im unkritischen Betrieb durch einen leicht schwankenden Verlauf der Stromamplitude aus. Die Schwankungen der Stromamplitude im Normalbetrieb sind insbesondere durch die momentane Belastung bedingt. Aber auch die Temperatur des Motors und/oder der Umgebung können eine Einfluss haben. Es ist daher nicht unüblich, dass die Stromamplitude sich bei längerem Betrieb verändert, ohne dass daraus ein kritischer Betriebszustand abgeleitet werden müsste. Um den Normalbetrieb zuverlässig überwachen zu können, ist daher eine ständige Anpassung des zulässigen Betriebsbereiches erforderlich. Erfindungsgemäß wird der zulässige Betriebsbereich durch Mittelung der in einem vorgegebenen Zeitintervall 10 gemessenen Betriebsparameterwerte (hier: Motorstromwerte) ermittelt. Aus diesen gemittelten Werten ergibt sich ein Vergleichswert 11. Ein kritischer Zustand des Elektromotors ergibt sich im Falle der Überwachung des Motorstroms insbesondere dann, wenn die Stromamplitude eine Obergrenze 12 überschreitet. Diese Obergrenze 12 wird zweckmäßigerweise wieder durch Multiplikation des Vergleichswertes mit einer vorgegebenen Verhältniszahl (beispielsweise 1,5) festgelegt. Das Überschreiten der Obergrenze 12 des Motorstromwertes ist in Fig. 4 zum Zeitpunkt t₄ ersichtlich. Dies zeigt an, dass sich der Motor in einem kritischen Zustand befindet, sodass ein entsprechendes Ausgangssignal, beispielsweise zur Abschaltung des Motors, ausgelöst werden sollte. Um unnötige Abschaltungen des Motors bei kurzfristigen Überschreitungen der Obergrenze 12 zu vermeiden, ist es zweckmäßig, wenn das Ausgangssignal zur Abschaltung des Motors erst dann erzeugt wird, wenn sich die Motorstromamplitude über ein vorgegebenes Zeitintervall 14 außerhalb des zulässigen Bereichs befindet. Damit die Ermittlung des Vergleichswertes 11 nicht durch Messwerte verfälscht wird, die kurz vor Verlassen des zulässigen Betriebsbereich ermittelt wurden, ist weiterhin vorgesehen, die Anpassung des Vergleichswertes erst nach einer zeitlichen Verzögerung vorzunehmen, wobei eine Anpassung dann nicht vorgenommen wird, wenn der gemessen Betriebsparameter in der Verzögerungszeit den zulässigen Betriebsbereich verlässt.

Im dargestellten Ausführungsbeispiel gemäß Fig. 4 würden die im Zeitintervall 10 gemessenen Werte zur Anpassung des Vergleichswertes 11 herangezogen werden, weil sich im anschließenden Zeitintervall 13, welches die Verzögerungszeit darstellt, der Betriebsparameter noch innerhalb des zulässigen Betriebsbereichs befindet. Anders sieht es allerdings bei dem in Zeitintervall 13 gemessenen Werten aus, die nicht zur Anpassung des Vergleichswertes 11 herangezogenen werden, weil sich im anschließenden Zeitintervall 14 der Betriebsparameter außerhalb des zulässigen Betriebsbereiches befindet.

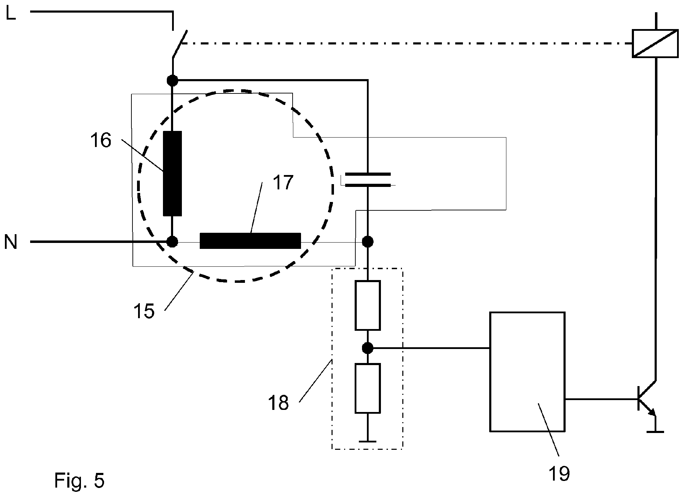

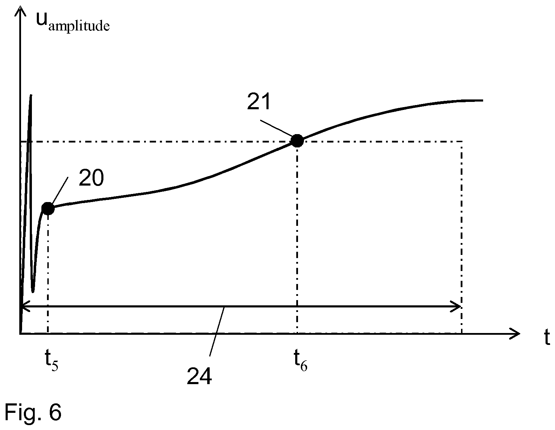

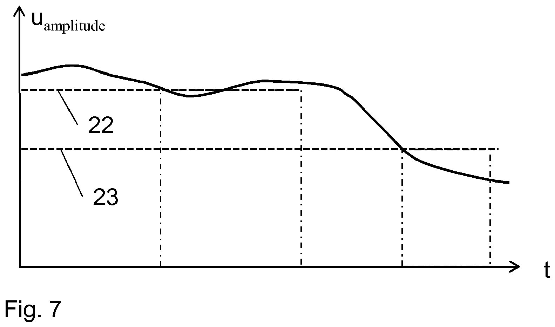

Ein zweites Ausführungsbeispiel ist in Fig. 5 dargestellt und zeigt einen Wechselstrommotor 15 mit einer Hauptwicklung 16 und einer Hilfswicklung 17, wobei über eine Messschaltung 18 mit Hilfe eines Mikroprozessors 19 die Spannung der Hilfswicklung 17 als Betriebsparameter gemessen wird. Die ermittelte Kennlinie der gemessenen Spannungsamplitude während des Anlaufbereiches ist in Fig. 6 dargestellt, während die Spannungskennlinie im Normalbetrieb in Fig. 7 gezeigt ist.

Auch der Spannungsverlauf während des Anlaufbetriebs ist bis zu einem Zeitpunkt t₅ noch sehr schwankend, während sich dann ein stetig ansteigender Verlauf ergibt. Ein erfolgreicher Motorstart lässt sich wiederum mit Hilfe eines Schwellenwertes 21 bestimmen, wobei der Schwellenwert 21 wiederum durch Multiplikation eines Anlaufwertes 20 mit einer vorgegebenen Verhältniszahl (beispielsweise 1,4) festgelegt ist und sich im dargestellten Beispiel zum Zeitpunkt t₆ einstellt. Die Festlegung des Anlaufwertes 20 kann dabei in analogerweise zur Festlegung des Anlaufwertes 5 bei der Motorstrommessung erfolgen. Da sich jedoch die Spannungsamplitude vom Anlaufwert 20 bis zur Schwellenwert 21 im Gegensatz zum Motorstrom stetig vergrößert, bildet der Schwellenwert 21 somit eine Untergrenze für den nach einen vorgegebenen Zeitintervall 24 zu erreichenden Spannungswert. Ansonsten kann auch hier der Übergangsverlauf zwischen Anlaufwert 20 und Schwellenwert 21 daraufhin untersucht werden, ob der Verlauf differenzierbar ist.

Im Normalbetrieb gemäß in Fig. 7 wird wiederum durch Mittelung der gemessenen Spannungswerte ein Vergleichswert 22 berechnet, aus dem sich durch ein vorgegebenes Verhältnis eine Untergrenze 23 ergibt. Die Untergrenze 23 kann sich beispielsweise durch Multiplikation des Vergleichswertes mit dem Faktor 0,8 ergeben. Sollte die Spannung unter die Untergrenze 23 absinken, liegt ein Verlassen des zusätzlichen Betriebsbereiches vor, der ggf. nach einer Verzögerungszeit, zu der Auslösung eines Ausgangssignals führt. Ansonsten führt auch bei der Spannungsmessung eine Anpassung des Vergleichswertes 22 erst nach einer vorgegebenen Verzögerungszeit statt, wobei eine Anpassung des Vergleichswertes 22 insbesondere dann nicht vorgenommen wird, wenn die gemessene Spannung während der Verzögerungszeit den zulässigen Betriebsbereich verlassen sollte.

Wenngleich es völlig ausreichend ist, wenn entweder der Motorstrom oder die Motorspannung überwacht wird, ist es im Rahmen der Erfindung aber auch denkbar, dass beide Werte separat voneinander oder im Sinne einer Leistungsüberwachung gemeinsam berücksichtigt werden. Die Besonderheit des obigen Verfahrens besteht darin, dass die Festlegung des zulässigen Betriebsbereichs durch den zu überwachenden Betriebsparameter (Strom und/oder Spannung) erfolgt. Für die Überwachung sind daher keine motorspezifischen Sollkennlinien erforderlich. Der zulässige Betriebsbereich wird außerdem während des Betriebes ermittelt und ständig angepasst.

Das obige beschriebene Verfahren ist daher auch für unterschiedliche elektrische Motoren einsetzbar.

## Patentansprüche

1. Verfahren zum Schutz von elektrischen Motoren vor kritischen Betriebszuständen, wobei im Betrieb des elektrischen Motors ein Motorstromwert und/oder ein Motorspannungswert gemessen und mit einem zulässigen Betriebsbereich verglichen wird, wobei ein Ausgangssignal bei Verlassen des zulässigen Betriebsbereichs generiert wird,
**dadurch gekennzeichnet, dass** der gemessene Motorstromwert und/oder der gemessene Motorspannungswert während des Betriebes des elektrischen Motors gleichzeitig auch zur Ermittlung des zulässigen Betriebsbereichs verwendet wird und der zulässige Betriebsbereich während des Betriebes des elektrischen Motors laufend angepasst wird.

2. Verfahren nach Anspruch 1, **dadurch gekennzeichnet, dass** der Betrieb des elektrischen Motors durch einen anfänglichen Anlaufbetrieb und einen sich daran anschließenden Normalbetrieb gekennzeichnet ist und der zulässige Betriebsbereich für den Anlaufbetrieb und/oder den Normalbetrieb ermittelt wird.

3. Verfahren nach Anspruch 1, **dadurch gekennzeichnet, dass** das Ausgangssignal bei Verlassen des zulässigen Betriebsbereichs nur dann erzeugt wird, wenn der gemessene Motorstromwert und/oder der gemessene Motorspannungswert den zulässigen Betriebsbereich für wenigstens eine definierte Zeitdauer verlässt, wobei die definierte Zeitdauer eine vorgegebene Zeitdauer darstellt oder in Abhängigkeit des Ausmaßes der Überschreitung des zulässigen Betriebsbereichs angepasst wird.

4. Verfahren nach Anspruch 2, **dadurch gekennzeichnet, dass** die Ermittlung des zulässigen Betriebsbereichs für den Anlaufbereich die Ermittlung eines Anlaufwertes und eines Schwellenwertes des gemessenen Motorstromwerts und/oder des gemessenen Motorspannungswerts umfasst, wobei der Schwellenwert den Übergang zum Normalbetrieb kennzeichnet.

5. Verfahren nach Anspruch 4, **dadurch gekennzeichnet, dass** die Ermittlung des zulässigen Betriebsbereichs für den Anlaufbereich auch die Erfassung eines Übergangsverlaufs des gemessenen Motorstromwerts und/oder des gemessenen Motorspannungswerts zwischen Anlaufwert und Schwellenwert umfasst, wobei ein zulässiger Betriebsbereich nur dann vorliegt, wenn der Betrag der Ableitung des erfassten Übergangsverlaufs einen vorgegebenen maximalen Steigungswert nicht überschreitet.

6. Verfahren nach Anspruch 4, **dadurch gekennzeichnet, dass** eine Ober- und/oder Untergrenze des zulässigen Betriebsbereichs für den Anlaufbetrieb durch den Schwellenwert definiert wird, der sich durch Multiplikation des Anlaufwertes mit einer vorgegebenen Verhältniszahl ergibt.

7. Verfahren nach Anspruch 4, **dadurch gekennzeichnet, dass** der Anlaufwert durch die erste Amplitude bzw. den ersten Effektivwert des gemessenen Motorstromwerts und/oder des gemessenen Motorspannungswerts ab einem der nachfolgend aufgeführten Zeitpunkte definiert ist:
- ein vorgegebener Zeitpunkt nach Einschaltung des Motors oder
- ein Zeitpunkt, bei dem der gemessene Motorstromwert und/oder der gemessene Motorspannungswert anfängt, die Frequenz eines Versorgungsnetzes aufzuweisen, an dem der Motor betrieben wird oder
- ein Zeitpunkt, ab dem der Verlauf des gemessenen Motorstromwerts und/oder des gemessenen Motorspannungswerts differenzierbar wird.

8. Verfahren nach Anspruch 4, **dadurch gekennzeichnet, dass** der Anlaufwert durch den maximalen Wert des gemessenen Motorstromwerts nach Einschalten des Motors definiert ist.

9. Verfahren nach Anspruch 4, **dadurch gekennzeichnet, dass** als elektrischer Motor ein Wechselstrommotor mit einer Hauptwicklung und einer Hilfswicklung zur Anwendung kommt, wobei der Motorspannungswert an der Hilfswicklung gemessen wird und der Anlaufwert durch den minimalen Wert des gemessenen Motorspannungswerts nach Einschalten des Motors festgelegt wird.

10. Verfahren nach Anspruch 2, **dadurch gekennzeichnet, dass** die Ermittlung des zulässigen Betriebsbereichs für den Normalbetrieb die Bestimmung eines Vergleichswertes durch Mittelung mehrerer Werte oder durch Tiefpassfilterung des gemessenen Motorstromwerts und/oder des gemessenen Motorspannungswerts während des Normalbetriebs beinhaltet.

11. Verfahren nach Anspruch 10, **dadurch gekennzeichnet, dass** eine Ober- und/oder Untergrenze des zulässigen Betriebsbereichs für den Normalbetrieb durch Multiplikation des Vergleichswertes mit einer vorgegebenen Verhältniszahl festgelegt wird.

12. Verfahren nach Anspruch 10, **dadurch gekennzeichnet, dass** der Vergleichswert laufend angepasst wird, aber die Anpassung erst nach einer vorgegebenen, zeitlichen Verzögerung vorgenommen wird.

13. Verfahren nach Anspruch 10, **dadurch gekennzeichnet, dass** der Vergleichswert laufend angepasst wird, wobei jedoch eine Anpassung ausgesetzt wird, wenn der gemessene Motorstromwert und/oder der gemessene Motorspannungswert den zulässigen Betriebsbereich verlassen hat und die Anpassung mit einer zeitlichen Verzögerung fortgesetzt wird, wenn sich der gemessene Motorstromwert und/oder der gemessene Motorspannungswert wieder im zulässigen Betriebsbereich befindet.

14. Verfahren nach Anspruch 10, 11, 12 und 13, **dadurch gekennzeichnet, dass** die laufende Anpassung des Vergleichswertes in der Weise erfolgt, dass die Mittelung oder Tiefpassfilterung des gemessenen Motorstromwerts und/oder des gemessenen Motorspannungswerts zeitlich gleitend mit den aktuellen Messwerten stattfindet.

15. Verfahren nach Anspruch 4, **dadurch gekennzeichnet, dass** eine Ober- und/oder Untergrenze des zulässigen Betriebsbereichs für den Normalbetrieb durch Multiplikation des Anlaufwertes mit einer vorgegebenen Verhältniszahl festgelegt wird.

## Claims

1. Method for the protection of electric motors from critical operating states wherein, as the electric motor is operating, a motor current value and/or a motor voltage value is/are measured and compared with a permissible operating range wherein an output signal is generated when leaving the permissible operating range,
**characterized in that** the motor current value and/or the motor voltage value which are being measured while the electric motor is operating are also used for determining the permissible operating range and **in that** the permissible operating range is continuously adjusted while the electric motor is operating.

2. Method according to claim 1, **characterised in that** the operation of the electric motor is **characterised by** an initial start-up operation followed by normal operation and the permissible operating range for the start-up operation and/or the normal operation is determined.

3. Method according to claim 1, **characterised in that** the output signal when leaving the permissible operating range is not generated until the measured motor current value and/or the measured motor voltage value leaves the permissible operating range for at least a defined time, wherein the defined time constitutes a predetermined time or is adjusted as a function of the extent to which the permissible operating range is exceeded.

4. Method according to claim 2, **characterised in that** the determination of the permissible operating range for the start-up region comprises the determination of a start-up value and of a threshold value of the measured motor current value and/or of the measured motor voltage value, wherein the threshold value signifies the transition to normal operation.

5. Method according to claim 4, **characterised in that** the determination of the permissible operating range for the start-up region also comprises recording a transition course of the measured motor current value and/or of the measured motor voltage value between start-up value and threshold value wherein a permissible operating range exists only if the amplitude of the derivative of the recorded transition pattern does not exceed a predetermined maximum gradient.

6. Method according to claim 4, **characterised in that** an upper and/or lower limit of the permissible operating range for the start-up operation is/are defined by the threshold value, produced by multiplying the start-up value by a predetermined factor.

7. Method according to claim 4, **characterised in that** the start-up value is defined by the first amplitude or first effective value of the measured motor current value and/or of the measured motor voltage value after one of the times listed below:
- a predetermined time after switching on the motor or
- a time at which the measured motor current value and/or the measured motor voltage value starts to assume the frequency of a mains supply on which the motor is operating, or
- a time after which the course of the measured motor current value and/or of the measured motor voltage value is/are differentiable.

8. Method according to claim 4, **characterised in that** the start-up value is defined by the maximum value of the measured motor current value after switching on the motor.

9. Method according to claim 4, **characterised in that** an alternating current motor with a main winding and an auxiliary winding is used as an electric motor, wherein the motor voltage value is measured at the auxiliary winding and the start-up value is established by the minimum value of the measured motor voltage value after switching on the motor.

10. Method according to claim 2, **characterised in that** the determination of the permissible operating range for normal operation consists of establishing a comparative value by averaging several values of the measured motor current value and/or of the measured motor voltage value during normal operation.

11. Method according to claim 10, **characterised in that** an upper and/or lower limit of the permissible operating range for normal operation is/are established by multiplying the comparative value by a predetermined factor.

12. Method according to claim 10, **characterised in that** the comparative value is adjusted continuously, but the adjustment is undertaken only after a predetermined time delay.

13. Method according to claim 10, **characterised in that** the comparative value is adjusted continuously, wherein, however, adjustment is suspended if the measured motor current value and/or the measured motor voltage value have/has left the permissible operating range and the adjustment is resumed with a time delay when the measured motor current value and/or the measured motor voltage value again fall(s) within the permissible operating range.

14. Method according to claims 10, 11, 12 and 13, **characterised in that** the continuous adjustment of the comparative value takes place in such a manner that the averaging or low pass filtering of the measured motor current value and/or of the measured motor voltage value takes place at the same time as the actual measured values are taken.

15. Method according to claim 4, **characterised in that** an upper and/or lower limit of the permissible operating range is/are established for normal operation by multiplying the start-up value by a predetermined factor.

## Revendications

1. Procédé de protection de moteurs électriques contre des états de fonctionnement critiques, où, au cours du fonctionnement du moteur électrique, une valeur de courant du moteur et/ou une valeur de tension du moteur est mesurée et comparée à une plage de fonctionnement admissible, où un signal de sortie est généré quand on se trouve en dehors de la plage de fonctionnement admissible,
**caractérisé en ce que** la valeur - mesurée - de courant du moteur et/ou la valeur - mesurée - de tension du moteur au cours du fonctionnement du moteur électrique est utilisée aussi, en même temps, pour servir à la recherche de la plage de fonctionnement admissible, et la plage de fonctionnement admissible est adaptée de façon continue au cours du fonctionnement du moteur électrique.

2. Procédé selon la revendication 1, **caractérisé en ce que** le fonctionnement du moteur électrique est **caractérisé par** un fonctionnement initial au moment du démarrage et par un fonctionnement normal faisant suite à ce fonctionnement initial, et la plage de fonctionnement admissible est recherchée pour le fonctionnement au moment du démarrage et/ou pour le fonctionnement normal.

3. Procédé selon la revendication 1, **caractérisé en ce que** le signal de sortie, quand on se trouve en dehors de la plage de fonctionnement admissible, est produit seulement quand la valeur - mesurée - de courant du moteur et/ou la valeur - mesurée - de tension du moteur se trouve en dehors de la plage de fonctionnement admissible pendant au moins une période de temps définie, où la période de temps définie représente une période de temps prédéterminée ou bien est adaptée en fonction de l'ampleur du dépassement de la plage de fonctionnement admissible.

4. Procédé selon la revendication 2, **caractérisé en ce que** la recherche de la plage de fonctionnement admissible, pour la plage se situant au moment du démarrage, comprend la recherche d'une valeur au moment du démarrage et d'une valeur de seuil de la valeur - mesurée - de courant du moteur et/ou de la valeur - mesurée - de tension du moteur, où la valeur de seuil caractérise la transition vers le fonctionnement normal.

5. Procédé selon la revendication 4, **caractérisé en ce que** la recherche de la plage de fonctionnement admissible, pour la plage se situant au moment du démarrage, comprend également la détection d'un profil de transition de la valeur - mesurée - de courant du moteur et/ou de la valeur - mesurée - de tension du moteur, entre une valeur au moment du démarrage et une valeur de seuil, où une plage de fonctionnement admissible n'est présente que si la valeur de la dérivée du profil de transition détecté ne dépasse pas une valeur de pente maximale prédéfinie.

6. Procédé selon la revendication 4, **caractérisé en ce qu'**une limite supérieure et/ou une limite inférieure de la plage de fonctionnement admissible, pour le fonctionnement au moment du démarrage, est définie par la valeur de seuil que l'on obtient par multiplication de la valeur au moment du démarrage, avec un ratio prédéfini.

7. Procédé selon la revendication 4, **caractérisé en ce que** la valeur au moment du démarrage est définie par la première amplitude ou par la première valeur effective de la valeur - mesurée - de courant du moteur et/ou de la valeur - mesurée - de tension du moteur, à partir de l'un des moments cités ci-dessous :
- un moment prédéfini après mise en marche du moteur, ou bien
- un moment au cours duquel la valeur - mesurée - de courant du moteur et/ou la valeur - mesurée - de tension du moteur commence à présenter la fréquence d'un réseau d'alimentation sur lequel le moteur est actionné, ou bien
- un moment à partir duquel le profil de la valeur - mesurée - de courant du moteur et/ou de la valeur - mesurée - de tension du moteur peut être différencié.

8. Procédé selon la revendication 4, **caractérisé en ce que** la valeur au moment du démarrage est définie par la valeur maximale de la valeur de courant du moteur, qui a été mesurée après mise en marche du moteur.

9. Procédé selon la revendication 4, **caractérisé en ce que** s'applique ici, comme moteur électrique, un moteur à courant alternatif comprenant un enroulement principal et un enroulement auxiliaire, où la valeur de tension du moteur est mesurée sur l'enroulement auxiliaire, et la valeur au moment du démarrage est fixée par la valeur minimale de la valeur de tension du moteur, qui a été mesurée après mise en marche du moteur.

10. Procédé selon la revendication 2, **caractérisé en ce que** la recherche de la plage de fonctionnement admissible, pour le fonctionnement normal, comprend la détermination d'une valeur comparative obtenue en calculant la moyenne de plusieurs valeurs, ou bien en effectuant un filtrage passe-bas de la valeur - mesurée - de courant du moteur et/ou de la valeur - mesurée - de tension du moteur au cours du fonctionnement normal.

11. Procédé selon la revendication 10, **caractérisé en ce qu'**une limite supérieure et/ou une limite inférieure de la plage de fonctionnement admissible, pour le fonctionnement normal, est fixée par multiplication de la valeur comparative, avec un ratio prédéfini.

12. Procédé selon la revendication 10, **caractérisé en ce que** la valeur comparative est adaptée de façon continue, mais l'adaptation est effectuée seulement après un retard de temps prédéfini.

13. Procédé selon la revendication 10, **caractérisé en ce que** la valeur comparative est adaptée de façon continue, où une adaptation est cependant interrompue quand la valeur - mesurée - de courant du moteur et/ou la valeur - mesurée - de tension du moteur s'est placée en dehors de la plage de fonctionnement admissible, et l'adaptation s'est continuée avec un retard de temps quand la valeur - mesurée - de courant du moteur et/ou la valeur - mesurée - de tension du moteur se trouve à nouveau dans la plage de fonctionnement admissible.

14. Procédé selon la revendication 10, 11, 12 et 13, **caractérisé en ce que** l'adaptation continue de la valeur comparative se produit de manière telle, que le calcul de la moyenne ou le filtrage passe-bas de la valeur - mesurée - de courant du moteur et/ou de la valeur - mesurée - de tension du moteur ait lieu de manière flottante, dans le temps, avec les valeurs mesurées en cours.

15. Procédé selon la revendication 4, **caractérisé en ce qu'**une limite supérieure et/ou une limite inférieure de la plage de fonctionnement admissible, pour le fonctionnement normal, est fixée par multiplication de la valeur au moment du démarrage, avec un ratio prédéfini.
